Europäisches Patentamt

(19) European Patent Office

Office européen des brevets

(11) Numéro de publication: **0 139 570**
**B1**

(12) **FASCICULE DE BREVET EUROPÉEN**

(45) Date de publication du fascicule du brevet:
16.12.87

(51) Int. Cl.⁴: **A 23 L 1/04,** A 23 L 1/06, A 23 L 1/187

(21) Numéro de dépôt: **84401904.2**

(22) Date de dépôt: **25.09.84**

(54) **Perfectionnements apportés aux compositions de nappage pour produits alimentaires tels que desserts lactés notamment.**

(30) Priorité: **27.09.83 FR 8315309**

(43) Date de publication de la demande:
**02.05.85 Bulletin 85/18**

(45) Mention de la délivrance du brevet:
**16.12.87 Bulletin 87/51**

(84) Etats contractants désignés:
**AT BE CH DE FR GB IT LI LU NL**

(56) Documents cité:
**EP-A-0 042 710**
**FR-A-2 296 376**
**FR-A-2 379 258**
**GB-A-2 039 712**
**GB-A-2 110 517**
**US-A-2 183 597**

**FOOD SCIENCE & TECHNOLOGY ABSTRACTS, 1982, abrégé 82029552; O. CHRISTENSEN et al.: "Effect of other hydrocolloids on the texture of kappa-carrageenan gels"**

**Le dossier contient des informations techniques présentées postérieurement au dépôt de la demande et ne figurant pas dans le présent fascicule.**

(73) Titulaire: **COMPAGNIE GERVAIS- DANONE, 126- 130 rue Jules Guesde, F-92302 Levallois Perret (FR)**

(72) Inventeur: **Guittard, Christine, Le Bellevue 7 rue du Maréchal Fayolle, F-94130 Nogent Sur Marne (FR)**
Inventeur: **Salou née Durand, Catherine, 11 résidence du Val, F-91120 Palaiseau (FR)**

(74) Mandataire: **Ores, Irène, CABINET ORES 6, Avenue de Messine, F-75008 Paris (FR)**

EP 0 139 570 B1

**0 139 570**

## Description

La présente invention est relative à de nouvelles compositions de nappage pour desserts et plus particulièrement à de nouvelles compositions de nappage présentant malgré un contact prolongé avec un gélifié d'extrait sec différent, une texture nappante et homogène dans le temps, sans apparition de synérèse.

De nombreux produits ayant pour but de modifier le comportement rhéologique des milieux aqueux dans lesquels ils sont introduits, ont été proposés dans l'Art Antérieur. Parmi les modificateurs de texture connus, des hydrocolloïdes extraits de produits naturels, tels que la farine de guar, la farine de caroube, les alginates, les carraghénanes et la gomme xanthane sont largement utilisés; ils sont désignés dans la Législation en vigueur en France sous le nom d'"agents épaississants et gélifiants".

La littérature fait état de l'utilisation de produits gélifiants dans la préparation de différents produits alimentaires. C'est ainsi que le Brevet français 2 296 376 décrit l'utilisation d'un gélifiant d'origine végétale pour la préparation de flans, ce gélifiant étant constitué de préférence par un mélange de carraghénanes Kappa, Lambda et Iota et de farine de caroube, ou par des extraits à base de Furcellaria ou d'agar ou encore par un mélange de farine de caroube et de gomme xanthane ou d'un polysaccharide microbien analogue. Ce gélifiant est introduit dans une proportion de l'ordre de 0,1 à 1 % du poids total de la préparation pour flan, avant traitement thermique, avec un exemple préféré dans lequel le gélifiant est présent à raison de 0,4 % dont 0,015 % de carraghénanes Kappa, 0,255 % de carraghénanes Iota, 0,1 % de carraghénanes Lambda et 0,03 % de caroube. Les brevets américains 3 996 389 et 4 242 367 décrivent des gommes stabilisantes pour des crèmes glacées, des desserts lactés glacés et des sorbets; le second de ces brevets préconise une composition stabilisante qui comprend 53 - 68 % de farine de guar, 20 - 35 % de gomme xanthane, 9 - 13 % de carraghénanes et 0 à 5 % de farine de caroube; cet agent stabilisant est présent dans le produit à stabiliser à raison de 0,14 à 0,25 % en poids, ce qui procure une stabilisation du produit pendant 10 jours, ce qui est considéré comme suffisant pour la commercialisation du produit. Les carraghénanes Iota et Kappa sont préférés en raison de leus propriétés gélifiantes. Le Certificat d'addition français 2357 188 préconise l'utilisation de compositions gélifiantes pour produits alimentaires aqueux ou lactés et notamment pour le yaourt, qui comprennent un mélange d'au moins un gélifiant constitué par un polysaccharide tel qu'agar, pectine, furcellarane, carraghénane ou xanthane et d'un deuxième gélifiant contitué par un galactomannane dont la viscosité de sa solution à 1 % est de 10 à 1000 centipoises $10^{-3}$ Pa.s à 25°C, lequel est pris dans le groupe qui comprend les extraits de caroube, de tara et d'Espina corona. Le gélifiant est ajouté au produit à gélifier, à raison de 0,4 % et le principal constituant du mélange gélifiant est la farine de caroube, qui est présente à raison de 55 à 75 % alors que les carraghénanes peuvent éventuellement être présents en faible proportion, de l'ordre de 5 %, et qu'il n'est pas indiqué qu'ils puissent être présents dans le mélange en association avec du xanthane.

L'analyse de l'Art antérieur qui précède fait apparaître que le but visé dans l'Art Antérieur a été essentiellement de préparer des produits alimentaires à texture de gel stables, ne présentant pas de synérèse au moins pendant un laps de temps prédéterminé; or, si la gélification est nécessaire pour la préparation d'un flan par exemple, une telle gélification n'est pas recherchée pour le nappage de ces flans qui doit être non gélifié, mais épaissi, qui doit, après un contact prolongé avec un gélifié d'extrait sec différent, ne pas présenter de synérèse, conserver une texture nappante et homogène au moins jusqu'à la date limite de consommation du produit alimentaire.

En effet, les nappages traditionnels, à extrait sec élevé, présentent le gros inconvénient de voir leur viscosité, une fois en contact avec le produit à napper, diminuer rapidement au cours du temps, au point de devenir, au bout de quelques jours, aussi fluides que de l'eau. La technique proposée dans le Brevet Français 2 379 258 vise à pallier cet inconvénient; toutefois, elle ne vise que les nappages à faible extrait sec (inférieur à 40 %).

On connaît également, par EP-A-0 042 710, une composition de nappage à base de fruit, comprenant un agent gélifiant et un épaississant.

On sait aussi, par FST Abstracts, vol.11, N° 82 029552 , que des gels peuvent être obtenus à l'aide de carraghénanes et de gommes.

Or, le but visé par la présente invention est d'obtenir un nappage constitué par une solution visqueuse et non par un gel, et qui ne présente pas les inconvénients de la technique connue jusqu'à ce jour.

La Demanderesse a pu établir, au cours des expérimentations auxquelles elle s'est livrée, que l'incorporation de l'un des épaississants connus du commerce à un nappage, ne permet pas d'obtenir un nappage répondant à toutes les caractéristiques suivantes:

1- Le nappage doit pouvoir présenter des propriétés de texture telles qu'il puisse former une phase distincte du produit à napper.

2- Le nappage doit être en mesure d'absorber de façon homogène l'eau d'exsudation résultant d'une différence de pression osmotique entre le nappage et le produit à napper.

3- Il doit, cependant, conserver des propriétés nappantes appropriées, au moins à partir de sa date de commercialisation jusqu'à sa date limite de consommation.

4- Le nappage doit, même dans le cas où il présente un extrait sec élevé, être suffisamment fluide pour être manipulable au plan industriel aussi bien pour sa préparation que pour son conditionnement.

5- Le nappage doit permettre un démoulage aisé du gélifié par le consommateur.

6- Le nappage doit avoir une bonne palatabilité (non filant et non artificiel).

2

0 139 570

La présente invention a pour but de pourvoir à une composition épaississante pour nappages de produits alimentaires tels que notamment, des desserts lactés, qui répond aux conditions qui viennent d'être énoncées, en ce qu'elle permet d'obtenir un nappage qui présente d'excellentes qualités de palatabilité et de texture, qui est capable d'absorber l'eau d'exsudation du produit nappé, sans subir de synérèse, qui est capable de conserver son homogénéité et un bel aspect nappant pendant toute sa durée de consommation, malgré son extrait sec élevé.

La présente invention a pour objet une composition de nappage pour produits alimentaires, et, notamment, pour desserts tels que produits à base de lait gélifié aromatisé, flans, crèmes, laquelle composition de nappage a un extrait sec supérieur à 40 %, et comprend une base de nappage telle que pulpe de fruit et au moins deux agents de modification de texture dont l'un est constitué par une gomme comestible, caractérisée en ce que la base de nappage est prise dans le groupe qui comprend des pulpes de fruits, du chocolat et/ou du café et/ou du moka sous forme de morceaux, de poudre, de pâte, de suspension ou de solution, ainsi que des sucres et/ou du caramel et/ou du miel et éventuellement des agents aromatisants, des agents acidulants, des colorants et d'autres additifs alimentaires appropriés et en ce que les agents de modification de texture forment une composition épaississante présente dans la composition de nappage à raison de 0,4 à 1,5 % en poids de la composition de nappage, ladite composition épaississante étant constituée par 0,2 à 1 % en poids de la composition de nappage de gomme xanthane et par 0,05 à 0,9 % en poids de la composition de nappage de carraghénanes.

Selon un mode de réalisation avantageux de la composition de nappage conforme à l'invention, la proportion de carraghénanes est comprise entre 0,1 et 0,9 % en poids si les carraghénanes mis en oeuvre sont des carraghénanes Lambda ou un mélange de carraghénanes Lambda, Iota et Kappa dans lequel la fraction Lambda est prédominante et dans lequel la fraction Kappa est inférieure ou égale à 0,2 %.

Selon un autre mode de réalisation avantageux de la composition de nappage conforme à l'invention, la proportion de carraghénanes est comprise entre 0,05 et 0,6 % en poids si les carraghénanes mis en oeuvre sont des carraghénanes Iota, ou est comprise entre 0,1 et 0,6 en poids dans le cas d'un mélange de carraghénanes Lambda, Iota et Kappa, dans lequel la fraction Iota est prédominante et la fraction Kappa est inférieure ou égale à 0,2 %.

Selon encore un autre mode de réalisation avantageux de la composition de nappage conforme à l'invention, la proportion de carraghénanes est comprise entre 0,05 et 0,3 % en poids dans le cas où les carraghénanes mis en oeuvre sont des carraghénanes Kappa, ou est comprise entre 0,1 et 0,45 % en poids dans le cas d'un mélange de carraghénanes Lambda, Iota et Kappa dans lequel la fraction Kappa est prédominante.

Selon un autre mode de réalisation avantageux de la composition de nappage conforme à l'invention, la base de nappage, exprimée en matière sèche, est présente dans la composition de nappage dans une proportion comprise entre 0 et 17 % environ du poids de ladite composition, les sucres, et/ou le caramel et/ou le miel, exprimés en matière sèche, sont présents dans une proportion comprise entre 35 et 69 % environ du poids de la composition de nappage, cette dernière contenant en outre de l'eau dans une proportion comprise entre 30 et 64 % environ en poids.

La teneur en extrait sec de la composition de nappage est avantageusement comprise entre 40 et 70 % par rapport au poids de la composition de nappage.

Selon un mode de réalisation avantageux de la composition de nappage conforme à l'invention, les carraghénanes Lambda, Iota et Kappa sont présents dans un rapport pondéral de l'ordre de 1-2 Lambda/ 1-2 Iota/ 0,5-1 Kappa.

Selon un autre mode de réalisation avantageux de la composition de nappage conforme à l'invention, les carraghénanes sont un mélange de carraghénanes type Lambda et de carraghénanes type Iota, dans un rapport pondéral de l'ordre de 1/2 à 2/1.

Selon une autre disposition avantageuse, les carraghénanes sont un mélange de carraghénanes de type Iota et de carraghénanes type Kappa, dans un rapport pondéral compris entre 1-3 Iota/ 0,5-1 Kappa.

Selon une autre réalisation, les carraghénanes sont un mélange de carraghénanes Lambda et de carraghénanes Kappa, dans un rapport pondéral compris entre 1-4 Lambda 0,5-1 Kappa.

La présente invention a également pour objet un produit alimentaire, notamment un flan, une crème ou un produit gélifié aromatisé à base de lait, nappé d'une composition de nappage conforme aux dispositions qui précèdent, dans lequel ledit produit alimentaire est présent à raison de 80 à 95 % et le nappage à raison de 5 à 20 % en poids.

Les exemples suivants illustrent l'invention.

3

**0 139 570**

### Exemples

**Exemple 1** - <u>Nappage à base de pulpe de fruits (fraise, framboise ou abricot).</u>

On prépare un nappage qui présente la composition qualitative et quantitative suivante:

| | |
|---|---|
| Pulpe de fruits [Extrait sec (E.S.) 12 %] | 15,0 % |
| Sucres (Saccharose, sirop de glucose)E.S.88 % | 65,0 % |
| Composition épaississante: Xanthane | 0,4 % |
| Carraghénanes type | |
| Iota | 0,2 % |
| Eau d'ajout | 16,0 % |
| Aromes et colorants | 3,4 % |

en mélangeant dans l'ordre la pulpe, le sirop de glucose et l'eau, puis en ajoutant, sous agitation, le mélange (ou "Mix") sucres/composition épaississante. On chauffe le mélange à 95°C pendant un temps qui ne dépasse pas 15 minutes, puis on refroidit à 70°C pour conditionner.

L'extrait sec de la composition de nappage préparée de la sorte est élevé, de l'ordre de 59,6 % au jour J.

Elle est alors utilisée pour napper des flans "DANY" à raison d'environ 10 grammes de composition de nappages pour environ 90 grammes de flan.

Au jour J + 28, le nappage est homogène, lisse et brillant; il n'a subi aucune synérèse; le démoulage du flan nappé est réalisé sans laisser de trace notable de nappage dans le pot qui contient ledit flan.

La composition du nappage parvenu è l'état d'équilibre, correspond à la formule suivante (Extrait sec: 30 %):

| | |
|---|---|
| Pulpe de fruit (E.S. 12 %) | 7,5 % |
| Sucres (Saccharose, sirop de glucose) E.S. 88 % | 32,7 % |
| Composition épaississante: Xanthane | 0,2 % |
| Carraghénanes | 0,1 % |
| Eau | 57,8 % |
| Ar*omes et colorants | 1,7 % |

La reprise d'eau s'est faite sans nuire à l'homogénéité du nappage.

**Exemple 2** - <u>Nappage à base de chocolat</u>

On prépare un nappage qui présente la composition qualitative et quantitative suivante, en procédant comme suit:

| | |
|---|---|
| Cacao non sucré (20 % de matière grasse) | 12,4 % |
| Sucres (Saccharose, sirop de glucose) E.S. 92 % | 53,0 % |
| Composition épaississante: Xanthane | 0,4 % |
| Carraghénanes type | |
| Lambda | 0,2 % |
| Eau d'ajout | 34,0 % |
| avec un extrait sec initial de 61,7 % | |

en mélangeant dans l'ordre, le cacao, l'eau et le "Mix" composé des sucres et de la composition épaississante.

On chauffe pendant un temps très court inférieur ou égal à une minute, à une température qui ne dépasse pas 135°C, puis l'on refroidit à 70°C pour conditionner, c'est à dire napper un flan "DANY" à raison de 8 g de composition de nappage pour 92 g de flan.

Au jour J + 28, le nappage n'a subi aucune synérèse; il est homogène, lisse et brillant et le démoulage du flan nappé est réalisé sans laissé de trace notable de nappage dans le contenant.

La composition du nappage, qui se trouve alors à l'état d'équilibre, correspond à la formule suivante (Extrait sec: 30 %):

4

0 139 570

| Cacao | 6,0 % |
|---|---|
| Sucres (E.S. 92 %) | 25.8 % |
| Composition épaississante: Xanthane | 0,2 % |
| Carraghénanes | 0.1 % |
| Eau | 67,9 % |

**Example 3** - <u>Nappage à base de caramel</u>

On prépare un nappage qui présente la composition qualitative et quantitative suivante:

| Caramel (E.S. 77 %) | 80,0 % |
|---|---|
| Sucre (Saccharose) | 4,0 % |
| Eau d'ajout | 15,4 % |
| Composition épaississante: | |
| Xanthane | 0,4 % |
| Carraghénanes type Iota | 0,2 % |
| avec un extrait sec initial de 66,2 % | |

en mélangeant le caramel, l'eau et le "Mix" constitué par le sucre et la composition épaississante, puis on chauffe le mélange pendant environ une minute à une température qui ne dépasse pas 135°C et l'on refroidit à 60°C pour conditionner.

La composition du nappage parvenu à l'état d'équilibre correspond à la formule suivante à J + 28:

| Caramel (77 % E.S.) | 36,2 % |
|---|---|
| Sucre | 1,8 % |
| Eau | 61,73 % |
| Composition épaississante: | |
| Xanthane | 0,18 % |
| Carraghénanes | 0,09 % |
| avec un extrait sec de 30 %. | |

On nappe un flan "DANY" à raison de 7 g de composition de nappage pour 93 g de flan.

Le comportement du nappage est sensiblement le même que dans l'exemple précédent.

**Exemple 4** - <u>Nappage à base de pulpe d'abricot</u>

On prépare, comme décrit à l'example 1, un nappage présentant la composition suivante:

| Pulpe d'abricot (E.8. 18 %) | 27 % |
|---|---|
| Sucres: saccharose sirop de glucose | |
| E.S. 88 % | 68 % |
| Composition épaississante: | |
| Xanthane | 0,4 % |
| Carraghénanes typé Lambda | 0,2 % |
| Ar*omes | 4 % |
| Colorants | 0,4 % |

Cette composition de nappage présente d'excellentes propriétés nappantes, avec une évolution en fonction du temps satisfaisante qui sera précisée plus loin.

**Exemple 5** - <u>Nappage à base de pulpe d'abricot</u>

On prépare une composition de nappage comme à l'exemple 4, à la seule différence que la composition épaississante a la formule suivante:

5

| | |
|---|---|
| Xanthane | 0,4 % |
| Carraghénanes type Iota | 0,2 % |

Cette composition de nappage présente d'excellentes propriétés nappantes avec une évolution en fonction du temps qui sera précisée plus loin.


**Exemple 6** - Nappage à base de pulpe d'abricot

On prépare une composition de nappage comme à l'exemple 4 à la seule différence près que la composition épaississante a la formule suivante:

| | |
|---|---|
| Xanthane | 0,4 % |
| Carraghénanes type Kappa | 0,2 % |

L'évolution de cette composition de nappage en fonction du temps est précisée plus loin.


**Exemple 7** - Nappage à base de pulpe d'abricot

On prépare une composition de nappage comme à l'exemple 4 à la seule différence que la composition épaississante a la formule suivante:

| | |
|---|---|
| Xanthane | 0,3 % |
| Carraghénanes type Lambda | 0,1 % |

L'évolution de cette composition de nappage en fonction du temps est précisée plus loin.


**Exemple 8** - Nappage à base de pulpe d'abricot

On prépare comme à l'exemple 4 une composition de nappage qui diffère de celle de l'exemple 4 en ce que la composition épaississante a la formule suivante:

| | |
|---|---|
| Xanthane | 0,6 % |
| Carraghénanes type Iota | 0,2 % |
| Carraghénanes type Kappa | 0,2 % |

L'évolution de cette composition de nappage en fonction du temps est précisée ci-après.

Les compositions de nappage décrites aux exemples 4 à 8 sont utilisées pour napper un flan à la vanille d'extrait sec égal à 25 % à raison d'environ 10 g pour 90 g de flan.

On récupère le nappage après élimination du flan, aux temps suivants: J, J + 2, J + 5, J + 16, J +23, J +28, en utilisant pour chaque expérimentation le nappage provenant de 30 pots, soit environ 300 g.

On effectue sur chaque échantillon de 300 g environ, conservé à 4°C, les mesures suivantes:

Mesure du pH

Mesure du Brix (au réfractomètre)

Mesure de la viscosité (au "RHEOMAT 108")

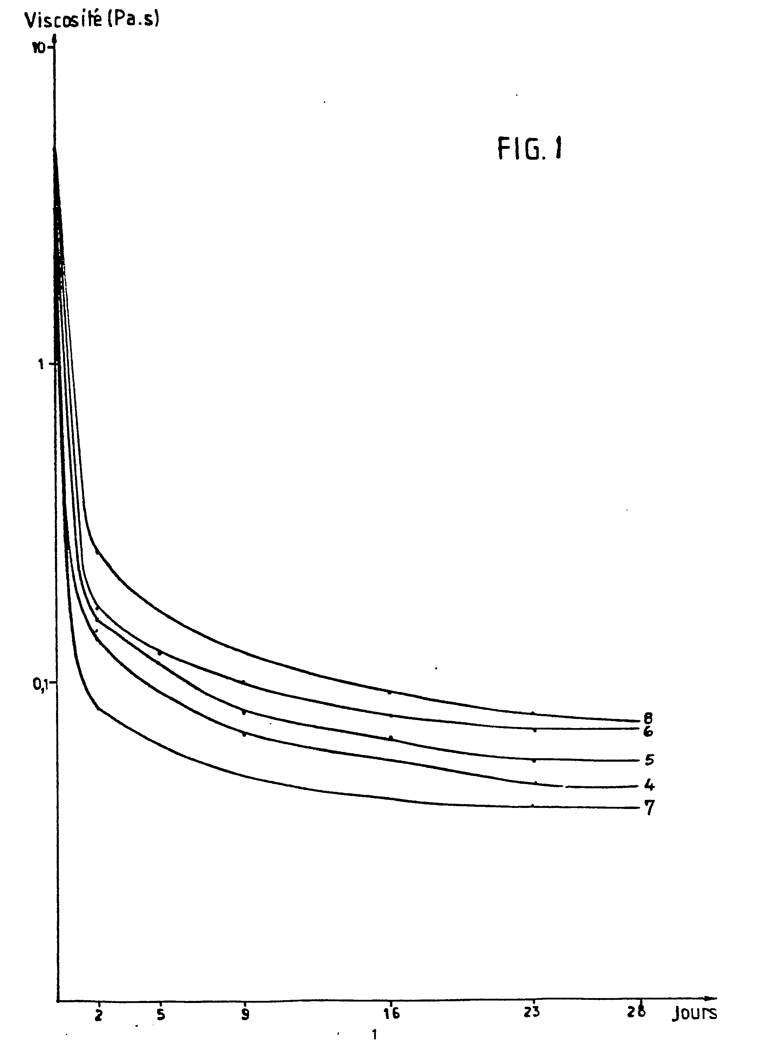

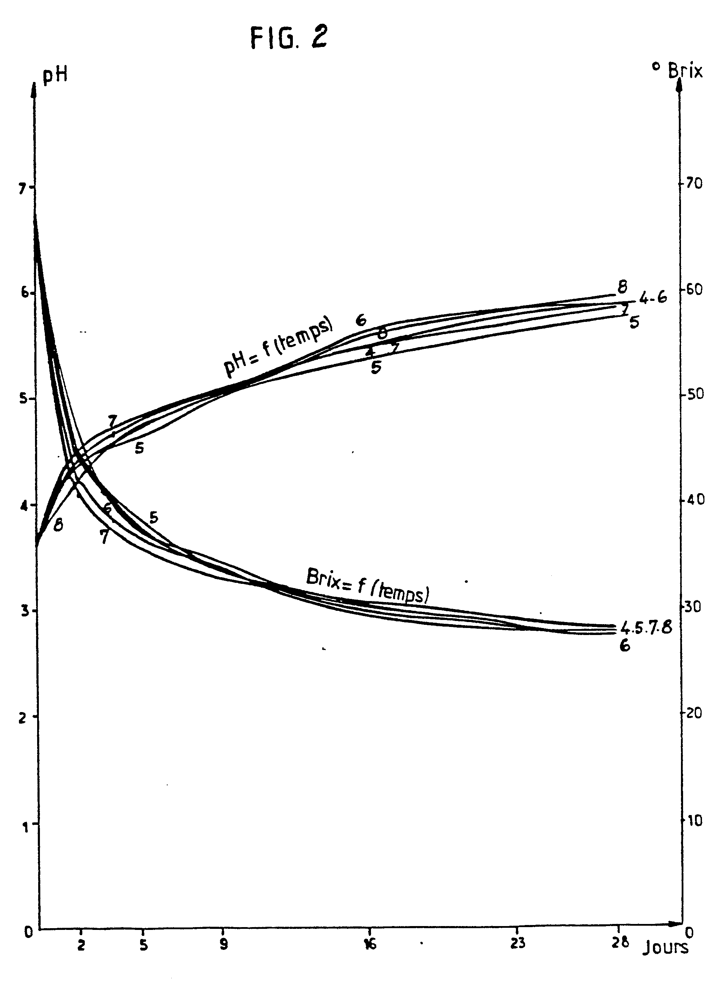

les résultats des mesures effectuées sont réunis dans les figures 1 et 2 annexées dans lesquelles:

La figure 1 présente les courbes de viscosité des compositions de nappage en fonction du temps, au cours de leur conservation en contact avec le flan, les viscosités étant lues au RHEOMAT 108 à une vitesse de cisaillement de 358 secondes.$_{-1}$, après 10 secondes de cisaillement et à 5°C.

La figure 2 présente d'une part les courbes de pH et d'autre part les courbes d'évolution de l'extrait sec(exprimé en °Brix) en fonction du temps.

Les résultats représentés au figures 1 et 2 sont précisés ci-après par les Tableaux qui vont suivre:


**Tableau I**

Composition de l'exemple 4 avec:

-0,4 % Xanthane

-0,2 % Carraghénanes Lambda

|  | J | J+2 | J+5 | J+9 | J+16 | J+23 | J+38 |
|---|---|---|---|---|---|---|---|
| pH | 3,62 | 4,39 | 4,72 | 5,08 | 5,48 | 5,77 | 5,86 |
| Brix | 67,0 | 42,5 | 37,5 | 33,5 | 29,7 | 28,0 | 28,0 |
| Viscosité* | | | | | | | |
| à 5° C Pa.s | 2,40 | 0,137 | 0,095 | 0,070 | 0,061 | 0,047 | 0,049 |

* moyenne de 6 mesures

|  | J | J+2 | J+5 | J+9 | J+16 | J+23 | J+28 |
|---|---|---|---|---|---|---|---|
| Ph | 3,60 | 4,40 | 4,62 | 5,12 | 5,38 | 5,61 | 5,74 |
| Brix | 67,0 | 42,2 | 38,7 | 33,5 | 30,7 | 29,0 | 28,0 |
| Viscosité * | | | | | | | |
| à 5°C Pa.s | 3,20 | 0,143 | 0,117 | 0,081 | 0,066 | 0,057 | 0,057 |

* moyenne de 6 mesures

**Tableau III**

Composition de l'exemple 6 avec:
-0,4 % Xanthane
-0,2 % Carraghénanes Kappa

|  | J | J+2 | J+5 | J+9 | J+16 | J+22 | J+28 |
|---|---|---|---|---|---|---|---|
| pH | 3,62 | 4,40 | 4,78 | 5,04 | 5,64 | 5,84 | 5,87 |
| Brix | 67,7 | 42,0 | 36,5 | 34,0 | 29,5 | 28,0 | 27,5 |
| Viscosité * | | | | | | | |
| à 5°C Pa.s | 4,70 | 0,170 | 0,121 | 0,102 | 0,079 | 0,072 | 0,073 |

* moyenne de 6 mesures

**Tableau IV**

Composition l'exemple 7 avec:
-0,3 % Xanthane
-0,1 % Carraghénanes Lambda

|  | J | J+2 | J+5 | J+9 | J+16 | J+22 | J+28 |
|---|---|---|---|---|---|---|---|
| pH | 3,60 | 4,52 | 4,80 | 5,12 | 5,47 | 5,69 | 5,88 |
| Brix | 67,5 | 40,6 | 36,0 | 33,1 | 30,5 | 29,0 | 28,0 |
| Viscosité * | | | | | | | |
| à 5°C Pa.s | 2,30 | 0,084 | 0,065 | 0,051 | 0,043 | 0,041 | 0,041 |

* moyenne de 6 mesures

**Tableau V**

Composition de l'exemple 8 avec:
-0,6 % Xanthane
-0,2 % Carraghénanes Iota
-0,2 % Carraghénanes Kappa

|  | J | J+2 | J+5 | J+9 | J+16 | J+22 | J+28 |
|---|---|---|---|---|---|---|---|
| pH | 3,64 | 4,23 | 4,75 | 5,03 | 5,58 | - | 5,97 |
| Brix | 67,7 | 46,8 | 37,6 | 34,5 | 30,2 | - | 28,0 |
| Viscosité * | | | | | | | |
| à 5°C Pa.s | 4,60 | 0,262 | 0,168 | 0,125 | 0,094 | - | 0,073 |

* moyenne de 6 mesures

Conclusion des courbes
- pH = f(temps) - Brix = f(temps): figure 2
Le profil des courbes est similaire quels que soient les agents de texture (ou composition épaississante) présents dans le nappage conformément à l'invention.

L'évolution des paramètres pH et Brix est très importante les 5 premiers jours de la conservation puis elle ralentit pour devenir très lente entre J + 6 et J + 28.

- Viscosité $\mu$ = f(temps): figure 1

La chute de viscosité est très importante entre J (date de conditionnement) et J + 2: nous avons représenté la courbe Log $\mu$ = f(temps) à la figure 1

Les compositions de nappage conformes à l'invention, donnent d'excellents résultats car l'eau d'exsudation du produit nappé est entièrement absorbée par la composition de nappage, qui conserve le même aspect de J + 5 à J + 28. au moins.

La palatabilité du produit est excellente au moins jusqu'à J + 28 inclus; le produit conserve une bonne cohésion et une bonne homogénéité au moins jusqu'à J + 28.

## Examples Comparatifs

Exemple 1A - On prépare un nappage comme dans l'exemple 1 en remplaçant toutefois la composition épaississante par 0,6 % de Xanthane seul.

Au jour J + 28, le produit présente une texture nappante mais filante; il manque de corps et la palatabilité est mauvaise.

Exemple 1 B - On prépare un nappage comme dans l'exemple 1 en remplaçant toutefois la composition épaississante par 0,6 % de carraghénanes type Lambda.

Le nappage présente un aspect semi-gélifié; il n'est pas homogène à J + 28 (on note la présence d'eau due à la synérèse).

Exemple 1 C - On prépare un nappage comme dans l'exemple 1 en remplaçant toutefois la composition épaississante par 1,0 % de farine de Guar.

La texture est nappante mais le produit n'est pas homogène (présence d'eau due à la synérèse à J + 28). De plus, la farine de Guar confère une mauvaise palatabilité au nappage.

Les exemples comparatifs montrent que seule la composition épaississante conforme à l'invention permet d'obtenir un excellent nappage et ce même à extrait sec élevé.

Exemple - On prépare un nappage à base de pulpe de framboise qui présente la composition suivante:

| | |
|---|---|
| Pulpe de framboise (extrait sec 18 %) | 16,55 % |
| Sucres (extrait sec 88 %) | 41,65 % |
| Composition épaississante: | |
| Xanthane | 0,24 % |
| Carraghénanes Lambda | 0,12 % |
| Eau d'ajout | 38,70 % |
| Ar*ome | 2,50 % |
| Colorants | 0,24 % |

On opère comme à l'exemple 1.

L'extrait sec de la composition de nappage préparée de la sorte est au jour J de 40 %.

Cette composition est utilisée pour napper des flancs "DANY" a raison de 10 grammes de composition de nappage pour 90 grammes de flan.

Les viscosités de la composition de nappage mesurées au RHEOMAT 108 après 10 secondes de cisaillement à 358 sec.$^{-1}$, sont les suivantes:

| | |
|---|---|
| J: | 0,130 PA.S |
| J + 4: | 0,078 PA.S |
| J + 28: | 0,047 PA.S |

## Revendications

1. Composition de nappage pour produits alimentaires, et notamment, pour desserts tels que produits à base de lait gélifié aromatisé, flans, crèmes, laquelle composition de nappage a un extrait sec supérieur à 40 %, et comprend une base de nappage telle que pulpe de fruit et au moins deux agents de modification de texture dont l'un est constitué par une gomme comestible, caractérisée en ce que la base de nappage est prise dans le groupe qui comprend des pulpes de fruits, du chocolat et/ou du café et/ou du moka sous forme de morceaux, de poudre, de pâte, de suspension ou de solution, ainsi que des sucres et/ou du caramel et/ou du miel et éventuellement des agents aromatisants, des agents acidulants, des colorants et d'autres additifs alimentaires appropriés et en ce que les agents de modification de texture forment une composition épaississante présente dans la composition de nappage à raison de 0,4 à 1,5 % en poids de la composition de nappage, ladite composition épaississante étant constituée par 0,2 à 1 % en poids de la composition de nappage de gomme xanthane et par 0,05 à 0,9 % en poids de la composition de nappage de carraghénanes.

2. Composition de nappage selon la revendication 1, caractérisée en ce que la proportion de carraghénanes est comprise entre 0,1 et 0,9 % en poids si les carraghénanes mis en oeuvre sont des carraghénanes Lambda ou un mélange de carraghénanes Lambda, Iota et Kappa dans lequel la fraction Lambda est prédominante et dans lequel la fraction Kappa est inférieure ou égale à 0,2 %.

3. Composition de nappage selon la revendication 1, caractérisée en ce que la proportion de carraghénanes est comprise entre 0,05 et 0,6 % en poids si les carraghénanes mis en oeuvre sont des carraghénanes Iota, ou est comprise entre 0,1 et 0,6 % en poids dans le cas d'un mélange de carraghénanes Lambda, Iota et Kappa, dans lequel la fraction Iota est prédominante et la fraction Kappa est inférieure ou égale à 0,2 %.

4. Composition de nappage selon la revendication 1, caractérisée en ce que la proportion de carraghénanes est comprise entre 0,05 et 0,3 % en poids dans le cas où les carraghénanes mis en oeuvre sont des carraghénanes Kappa, ou est comprise entre 0,1 et 0,45 % en poids dans le cas d'un mélange de carraghénanes Lambda, Iota et Kappa dans lequel la fraction Kappa est prédominante.

5. Composition de nappage selon quelconque des revendications 1 à 4, caractérisée en ce que la base de nappage, exprimée en matière sèche, est présente dans la composition de nappage dans une proportion comprise entre 0 et 17 % environ du poids de ladite composition, les sucres, et/ou le caramel et/ou le miel, exprimés en matière sèche, sont présents dans une proportion comprise entre 35 et 69 % environ du poids de la composition de nappage, cette dernière contenant en outre de l'eau dans une proportion comprise entre 30 et 64 % environ en poids.

6. Composition de nappage selon l'une quelconque des revendications 1 à 5, caractérisée en ce que la teneur en extrait sec de la composition de nappage est comprise entre 40 et 70 % par rapport au poids de la composition de nappage.

7. Composition de nappage selon la revendication 1, caractérisée en ce que les carraghénanes Lambda, Iota et Kappa sont présents dans un rapport pondéral de l'ordre de 1-2 Lambda/ 1-2 Iota/ 0,5-1 Kappa.

8. Composition de nappage selon la revendication 1, caractérisée en ce que les carraghénanes sont un mélange de carraghénanes type Lambda et de carraghénanes type Iota, dans un rapport pondéral de l'ordre de 1/2 à 2/1.

9. Composition de nappage selon la revendication 1, caractérisée en ce que les carraghénanes sont un mélange de carraghénanes de type Iota et de carraghénanes type Kappa, dans un rapport pondéral compris entre 1-3 Iota/ 0,5-1 Kappa

10. Composition de nappage selon la revendication 1, caractérisée en ce que les carraghénanes sont un mélange de carraghénanes Lambda et de carraghénanes Kappa, dans un rapport pondéral compris entre 1-4 Lambda 0,5-1 Kappa.

11. Produit alimentaire, notamment flan, crème ou produit gélifié aromatisé à base de lait, nappé d'une composition de nappage selon l'une quelconque des revendications 1 à 10 dans lequel ledit produit alimentaire est présent à raison de 80 à 95 % en poids environ et la composition de nappage à raison de 5 à 20 % en poids environ.

## Patentansprüche

1. Überzugszusammensetzung für Nahrungsmittel und insbesondere für Nachspeisen, wie Produkte auf der Basis von vereister aromatisierter Milch, Puddinge, Crèmes, wobei die Überzugszusammensetzung einen Trockengehalt von mehr als 40 % hat, und einen Überzugsgrundstoff umfaßt, wie Fruchtbrei, und wenigstens zwei Agentien zur Strukturmodifikation von denen eines durch ein eßbares Gummi dargestellt wird,
dadurch gekennzeichnet,
daß der Überzugsgrundstoff gewählt ist aus der Gruppe Fruchtbrei, Schokolade und/oder Kaffee und/oder Mokka in Form von Stücken, Puder, Teig, in Suspension oder in Lösung, ebenso wie Zucker und/oder Karamell und/oder Honig und gegebenenfalls aromatisierende Agentien, säuernde Agentien, Farbstoffe und andere Nahrungsmittelzusätze geeigneter Art, und wobei die Mittel zur Strukturmodifikation eine verdickende Zusammensetzung darstellen, die in der Überzugszusammensetzung in einer Menge von 0,4 bis 1,5 Gew.-% der Überzugszusammensetzung anwesend ist, wobei die genannte verdickende Zusammensetzung dargestellt wird durch 0,2 bis 1 Gew.-% der Überzugszusammensetzung an Xanthangummi und von 0,05 bis 0,9 Gew.-% der Überzugszusammensetzung an Karraghenanen.

2. Überzugszusammensetzung gemäß Anspruch 1,
dadurch gekennzeichnet,
daß der Anteil an Karraghenanen zwischen 0,1 und 0,9 Gew.-% beträgt,wenn die verwendeten Karraghenane Lambda-Karraghenane sind oder eine Mischung von Lambda, Jota- und Kappakarraghenanen, in der der Lambda-Anteil vorherrschend ist und in der der Kappa-Anteil kleiner oder gleich 0,2 % ist.

3. Überzugszusammensetzung gemäß Anspruch 1,
dadurch gekennzeichnet,
daß der Anteil an Karraghenanen zwischen 0,05 und 0,6 Gew.-% liegt, wenn die verwendeten Karraghenane Jota-Karragehenane sind, oder zwischen 0,1 und 0,6 Gew.-% im Falle einer Mischung von Lambda-, Jota- und Kappakarraghenanen, in der der Jota-Anteil vorwiegend ist und der Kappa-Anteil kleiner oder gleich 0,2 % ist.

4. Überzugszusammensetzung gemäß Anspruch 1,
dadurch gekennzeichnet,
daß der Anteil an Karraghenanen zwischen 0,05 und 3 Gew.-% in dem Falle liegt, wo die verwendeten Karraghenane Kappe-Karraghenane sind oder zwischen 0,1 und 0,45 % liegt, in dem Fall einer Mischung von Lambda-, Jota- und Kappa-Karraghenanen, in der der Kappa-Anteil vorherrschend ist.

5. Überzugszusammensetzung gemäß einem der Ansprüche 1 bis 4,
dadurch gekennzeichnet,
daß der Überzugsgrundstoff, ausgedrückt als Trockenmaterial, in der Überzugszusammensetzung vorhanden ist, in einem Anteil zwischen ungefähr 0 und 17 Gew.-% der genannten Zusammensetzung, die Zucker und/oder das Karamell und/oder der Honig, ausgedrückt in Trockensubstanz, in einem Anteil zwischen etwa 35 und 69 Gew.-% der Überzugszusammensetzung vorhanden sind, wobei die letztere unteranderem Wasser enthält, in einem Anteil, der zwischen etwa 30 und 64 Gew.-% liegt.

6. Überzugszusammensetzung gemäß einem der Ansprüche 1-5,
dadurch gekennzeichnet,
daß der Trockenextraktgehalt der Überzugszusammensetzung zwischen 40 und 70%, bezogen auf das Gewicht der Überzugszusammensetzung beträgt.

7. Überzugszusammensetzung gemäß Anspruch 1,
dadurch gekennzeichnet,
daß die Lambda-, Jota- und Kappa-Karraghenane vorhanden sind in einem Gewichtsverhältnis der Größenordnung von 1 bis 2 Lambda/1-2 Jota/0,5 bis 1 Kappa.

8. Überzugszusammensetzung gemäß Anspruch 1,
dadurch gekennzeichnet,
daß die Karraghenane eine Mischung der Karraghenane vom Typ Lambda sind und der Karraghenane von Typ Jota, in einem Gewichtsverhältnis der Größenordnung von 1/2 bis 2:1.

9. Überzugszusammensetzung gemäß Anspruch 1,
dadurch gekennzeichnet,
daß die Karraghenane ein Gemisch der Karraghenane vom Typ Jota und der Karraghenane vom Typ Kappa sind, in einem Gewichtsverhältnis zwischen 1 bis 3 Jota/0,5 bis 1 Kappa.

10. Überzugszusammensetzung gemäß Anspruch 1,
dadurch gekennzeichnet,
daß die Karraghenane eine Mischung von Lambda-Karraghenanen und von Kappa-Karraghenanen sind, in einem Gewichtsverhältnis zwischen 1 bis 4 Lambda/0,5 bis 1 Kappa.

11. Nahrungsmittel, insbesondere Pudding, Crème oder aromatisiertes vereistes Produkt auf Milchbasis, überzogen mit einer Überzugszusammensetzung gemäß einem der Ansprüche 1 bis 10, in welchem das genannte Nahrungsmittelprodukt anwesend ist in einer Menge von ungefähr 80 bis 95 Gew.-% und die Überzugszusammensetzung von etwa 5 bis 20 Gew.-%.

## Claims

1. Topping composition for foodstuffs and particularly for desserts such as flavored jellied milk, flans, creams, which topping composition has a dry extract higher than 40 %, and comprises a topping base such as fruit pulp and at least two texture-modifying agents one of which is constituted by an edible gum, characterized in that the topping base is taken from the group which comprises fruit pulp, chocolate and/or coffee and/or mocha in the form of fragments, powder, paste, suspension or solution, as well as sugars and/or caramel and/or honey and possibly flavoring agents, acidifying agents, colors and other suitable food additives and in that the texture-modifying agents form a thickening composition present in the topping composition in the proportion of 0.4 to 1.5 % by weight of the topping composition, said thickening composition being constituted by 0.2 to 1 % by weight of the topping composition of xanthan gum and by 0.05 to 0.9 % by weight of the topping composition of carraghenans.

2. Topping composition according to Claim 1, characterized in that the proportion of carraghenans is comprised between 0.1 and 0.9 % by weight if the carraghenans employed are Lambda carraghenans or a mixture of Lambda, Iota and Kappa carraghenans in which the Lambda fraction is predominant and in which the Kappafraction is less than or equal to 0.2 %.

3. Topping compostion according to Claim 1, characterized in that the proportion of carraghenans is comprised between 0.05 and 0.6 % by weight if the carraghenans employed are Iota carraghenans, or is comprised between 0.1 and 0.6 % by weight in the case of a mixture of Lambda, Iota and Kappa carraghenans, in which the Iota fraction is predominant and the Kappa fraction is less than or equal to 0.2 %.

4. Topping composition according to Claim 1, characterized in that the proportion of carraghenans is comprised between 0.05 and 0.3 % by weight in the case where the carraghenans employed are Kappa carraghenans or is comprised between 0.1 and 0.45 % by weight in the case of a mixture of Lambda, Iota and Kappa carraghenans in which the Kappa fraction is predominant.

5. Topping composition according to any one of Claims 1 to 4, characterised in that the topping base, expressed in dry matter, is present in the topping composition in a proportion comprised between 0 and 17 % approximately of the weight of said composition, the sugars, and/or the caramel and/or the honey, expressed as dry matter, are present in a proportion comprised between 35 and 69 % approximately of the weight of the topping composition, this latter containing in addition water in a proportion comprised between about 30 and 64 % by weight.

6. Topping composition according to any one of Claims 1 to 5, characterized in that the content in dry extract of the topping composition is comprised between 40 and 70 % with respect to the weight of the topping compositon.

7. Topping composition according to Claim 1, characterized in that the Lambda, Iota and Kappa carraghenans are present in a ratio by weight of the order of 1-2 Lambda/ 1-2 Iota/ 0.5-1 Kappa.

8. Topping composition according to Claim 1, characterized in that the carraghenans are a mixture of Lambda-type carraghenans and of Iota-type carraghenans in a proportion by weight of the order of 1/2 to 2/1.

9. Topping composition according to Claim 1, characterized in that the carraghenans are a mixture of Iota-type carraghenans and of Kappa-type carraghenans, in a ratio by weight comprised between 1-3 Iota/ 0.5-1 Kappa.

10. Topping composition according to Claim 1, characterized in that the carraghenans are a mixture of Lambda carraghenans and of Kappa carraghenans, in a ratio by weight comprised between 1-4 Lambda 0.5-1 Kappa.

11. Foodstuff, particularly a flan, cream or flavored jellied product based on milk, topped with a topping composition according to any one of Claims 1 to 10 in which said foodstuff is present in the proportion of 80 to 95 % by weight approximately and the topping composition in the proportion of 5 to 20 % by weight approximately.

FIG. 1

# FIG. 2